# EUROPEAN PATENT APPLICATION

(11) **EP 3 104 360 A1**
(43) Date of publication of application: **14.12.2016**
(21) Application number: 15382299.4
(22) Date of filing: 08.06.2015
(51) Int. Cl.: G09B 9/08, G09B 19/16, G09B 7/04, G09B 5/06

(54) **METHOD FOR TRAINING CREW IN A FLIGHT SIMULATOR**

(71) Applicant: The Boeing Company, Chicago, IL 60606-1596 (US)
(72) Inventor: FUCKE, Lars, 28042 Madrid (ES); CORREIA GRACIO, Bruno, 28042 Madrid (ES)
(74) Representative: Ungria López, Javier

(57) **Abstract**

A method for training flight crew in a flight simulator that comprises opening a database of flight events, wherein each flight event has desired flight crew performance (DFCP) data that comprise user data associated with expected user actions; generating a training session by selecting at least one flight event from the database of flight events; running the training session in the flight simulator with at least one student; gathering student data based on student actions during the training session; and comparing the gathered student data to the DFCP data corresponding to the same at least one flight event to produce a comparison result. The obtained comparison result allows establishing whether required flight competencies associated with the generated training session have been reached by the student.

## Description

### FIELD OF THE INVENTION

The present disclosure is related to a method for training flight crew in a flight simulator. More specifically, it describes a highly objective flight-crew training and evaluation method that uses a database wherein previously developed flight events and user performance standards have been stored to compare said stored information with gathered data from actions and performances of a current student or student crew during training of specific flight events. Said specific flight events will be associated to specific competencies or skills to be trained.

### BACKGROUND OF THE INVENTION

Flight crew performance evaluation in training is mostly performed subjectively by the flight instructors who are in the flight simulator cabin behind the flight crew being trained.

The flight crews are expected to adopt different strategies in response to different conditions and situations within each phase of flight. Each strategy calls for specific patterns, actions and behaviors when facing specific situations during execution of the training session. In order to evaluate the flight crew performance, the flight instructor observes the flight crew and their performance during training from behind so that the instructor's observations are limited to a subset of manual actions of the flight crew which are visible to the instructor as well as crew's verbal communications. Besides, since most of the evaluation process relies on subjective interpretation as well as observations being subject to human error and direction of attention by the instructor at that moment, flight crew evaluation can be rather inconsistent and depending on instructor pedigree and experience.

Because of these uncertainties, instructors face an elevated workload when striving to evaluate the flight crew actions, behaviors and performances, which may degrade the effectiveness of training and evaluating intervention through untimely and inaccurate guidance. Also, during the simulator session in existing solutions, flight instructors would have to be tracking all flight-crew control behavior visually and annotating it. This process is prone to human error due to the high workload of the flight instructor.

Previous solutions required the flight instructor to rely mostly on his/her own operational knowledge to create a flight-training scenario to train/test specific flight-crew skills or competencies. This makes the quality of the flight-training very dependent on the quality of the flight instructor.

Furthermore, the number of available instructors for training flight crew is usually quite limited, so it would be desirable to find a solution that attempts to reduce the on-the-job training time of the flight crew instructors and that allows an improvement in the one-to-one instructor/student ratio.

### SUMMARY OF THE INVENTION

To achieve the advantages and avoid the drawbacks listed above, a method for training flight crew in a flight simulator is disclosed hereafter.

The method of the present disclosure provides a significant improvement over existing solutions since it provides a consistent, objective and standardized method for training and evaluating flight crew performance by summarizing all elements of flight crew performance in objective performance requirements. The present method has been specially designed for automatic training and performance evaluation of flight crew actions in a flight simulator. Physical presence of an instructor in the flight simulator cabin may be avoided. The automated training and performance evaluation of these requirements allows for immediate and objective summary of flight crew performance during a simulator training session, as well as, in combination with a database of flight events (or scenario components), for automatic branching of a training session. This ensures comprehensive training of the full set of desired flight crew skills or competencies.

In one embodiment of the invention, the method for training flight crew in a flight simulator comprises the following steps:
opening a database of flight events, each flight event having desired flight crew performance (DFCP) data that, in turn, comprise user data associated with expected user actions. This database also may store previously developed training sessions, flight performance standards and previous user performance;
generating a training session by selecting at least one flight event from the database of flight events. The training session may be previously and manually generated by an instructor or may be automatically generated by a processor of the flight simulator, when a set of training parameters are provided. Depending on the training parameters provided to the flight simulator, the flight events are selected accordingly. These training sessions may be also stored in the database of flight events for future use;
running the training session in the simulator with at least one student. This training session is executed by the flight simulator processor;
gathering student data based on student actions and performance during the execution of the training session in the flight simulator; and,
comparing the gathered student data to the desired flight crew performance (DFCP) data corresponding to the same at least one flight event to produce a comparison result. This comparison step may be performed by the flight simulator processor or by an external device such an iPad, or similar, if the student actions are checked off manually by the instructor.

Advantageously, the training session is generated selecting and combining at least two flight events, although a plurality of flight events might be combined in order to generate a training session.

Advantageously, the desired flight crew performance (DFCP) data of the flight events are associated with specific flight competencies or skills. Therefore, specific competencies are associated with specific DFCP data, which in turn are associated to specific flight events. Thus, said flight events are selected depending on the competencies to be trained by the student.

The training sessions may be previously and manually generated by the instructor or may be automatically generated by the flight simulator when a set of training parameters are provided. Said training parameters may be the list of skills or competencies to be trained.

Advantageously, the gathered student data are stored in the database of flight events. Said student data are also associated with the student actions and performance and with the selected flight events and the generated training session. The stored student data might be used to update previously stored flight performance standards or user performance data.

Advantageously, the method further comprises generating a report based on the comparison result. This report is automatically generated by the flight simulator or by an external computer device, so the instructor can evaluate the skills of the flight crew.

Advantageously, the gathered student data and the flight crew performance (DFCP) data comprise data from at least one of aircraft handling data, crew actions, verbal communications, and eye gaze of a flight crew member.

Advantageously, the training session further comprises at least one flight event of normal or non-normal operations.

Advantageously, the method further comprises generating a quantitative proficiency profile based on one or more comparison results. The generation of the quantitative proficiency profile may comprise evaluating the obtained comparison results in order to establish whether the required level of competencies associated with the flight events of the generated training session has been reached by the student. Advantageously and based on this quantitative proficiency profile, the method may generate a list of training deficiencies, and generate a new training session comprising at least a flight event from the database of flight events to address said training deficiencies. Otherwise, the method may adapt the current training session by modifying some of its parameters in order to address the mentioned training deficiencies.

In another embodiment of the invention, disclosed is a computer programmed to implement the method previously described.

In another embodiment of the invention, disclosed is a computer program that, when executed on a computer, causes the computer to implement the method previously described.

In another embodiment of the invention, disclosed is a computer program storage medium having recorded thereon the cited computer program.

In another embodiment of the invention, disclosed is a flight simulator that comprises the previously described computer.

The advantages of the present disclosure over the solutions disclosed in the state of the art are the following:
- The method herein disclosed allows to automatically capture behaviors and performance of a training subject (student) in a flight simulator, and then objectively measuring the captured behaviors and performance against the corresponding desired flight crew performance (DFCP) data, in order to establish if said DFCP has been passed and therefore to establish if the training subject reaches specific competencies. Said DFCP data will correspond with the flight events of the executed training session. Prior behaviors and performance of the training subjects might also be stored in the database. Furthermore, the method automatically generates appropriate training sessions to address existing proficiency gaps.
- The present method reduces and could eliminate the need for a physical instructor/evaluator in the flight simulator cabin.
- Since a physical presence of the instructor during the training phase is not required, the method may allow a single instructor to evaluate a much larger group of students using a consistent and objective set of metrics.

### BRIEF DESCRIPTION OF THE FIGURES

Figure 1.- Shows a flow diagram of a particular embodiment of the method described in the present specification.
Figure 2.- Shows a detailed diagram of the information stored in the database of flight events.
Figure 3.- Shows a detailed flow diagram of a particular part of the method shown in figure 1.
Figure 4.- Shows an static training session in which primary student skills are trained.
Figure 5.- Shows a dynamic training session in which primary student skills are trained.

### DETAILED DESCRIPTION OF THE INVENTION

Next, a description of several examples of particular embodiments of the present invention is carried out, with illustrative character and without limitation, making reference to the numbering used in the figures.

In a particular example of the method proposed in the present disclosure is provided a consistent, objective and standardized training and evaluation method of pilot performance in flight crew training by summarizing all elements of pilot performance in objective performance requirements. The automated evaluation against these requirements allows for immediate and objective summary of pilot performance during a training session in a flight simulator as well as, in combination with a database of flight events, for automatic branching of a flight scenario. This ensures comprehensive training of the full set of desired flight crew skills or competencies.

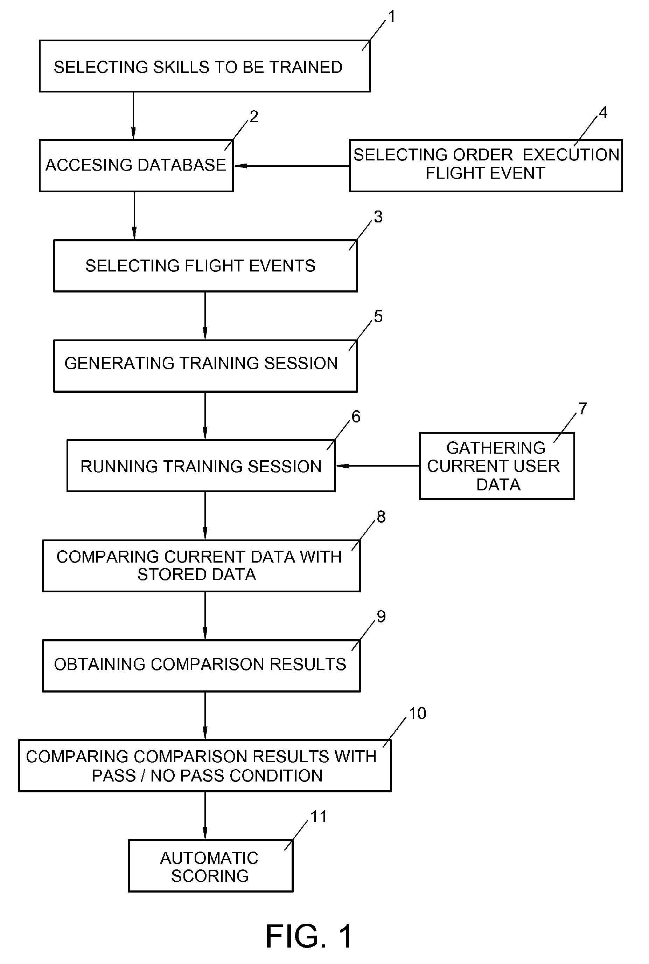

Figure 1 shows a flow diagram of a particular embodiment of the method for training flight crew in a flight simulator, for the particular case in which the student is an aircraft pilot.

Firstly, and once the aircraft pilot skills (from a list of pilot competencies/skills commonly used for pilot evaluation) to be trained are selected (1), the database of flight events or scenario components is accessed (2) and the flight events which correspond with the flight crew competencies to be trained are selected (3). The order in which the flight events must be run by the flight simulator is also selected (4). This database of flight events and flight crew competencies for different flight phases may be accessed by flight instructors in order to manually design flight-training sessions. The flight simulator may also automatically design a training session by providing it with the flight crew competencies to be trained.

Then, the training session or training scenario is generated (5) according to the selected flight events or scenario components (3) and their execution order (4). The training session is run (6) by the student flight crew in the flight simulator without the physical presence of the instructor. During the execution of the training session (6), the flight simulator gathers (7) data according to the student actions and performance. Specifically, the flight simulator gathers data corresponding to handling information, student actions, verbal communications, and eye gaze, although other data might be gathered, such as video recording, etc. Then these data are compared (8) with the desired flight crew performance data stored in the database of flight events in order to obtain comparison results (9) that will reflect the competencies of the pilot.

The pilot can then be evaluated objectively, and to a large degree automatically, based on the Desired Flight Crew Performance metrics stored within the database. In order to pass each one of the DFCP associated to the selected flight events, the pilot must perform the expected actions described in said DFCPs. Each flight event comprises at least one DFCP item, and each DFCP has at least one competency to be trained associated to it. Since DFCPs are related to flight competencies, passing the DFCP means that the student is proficient in the specific competencies associated to the DFCP.

Based on a pass/no pass condition (10) stored within the flight event, which is compared against the obtained comparison results, the crew is automatically scored (11) against the entirety of skills trained by the flight event. In a particular embodiment, when several skills are to be evaluated simultaneously, the method may return a score for each one of the evaluated skills. The obtained score is then the number of DFCPs that were passed (for a certain flight event or the whole training session) by the pilot. At the end of the training session these scores are summarized and associated to the respective skills/competencies. A quantitative proficiency profile for the crew is presented to the instructor which allows for immediate re-focusing of the training or a pass/no-pass decision.

This database structure allows for two different functionalities: design of flight-training scenarios or sessions and the evaluation of flight crews during its execution.

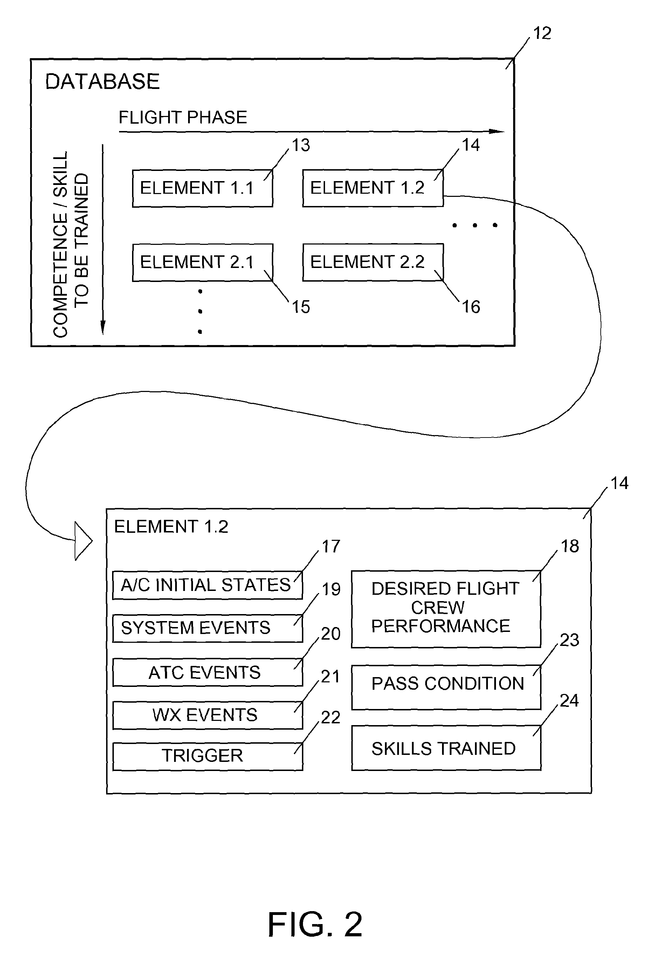

During the generation of a training session the instructor or the flight simulator processor may select only one flight event or they may select and combine several flight events for generating a training session. Specifically, figure 2 shows a particular embodiment in which only one flight event is selected from the database (12) of flight events. The selected flight event is the database element 1.2 (14) which corresponds with the flight event of "train communication during take-off". Other database elements (13,15,16) that may be also selected are for example: manual flying during approach, decision-making in emergency descent, etc. This data base element (14) further comprises additional training information like the aircraft initial state (17), the element trigger (22) (for example a lightning strike could trigger a computer failure), Air traffic control (ATC) events (20), weather conditions (21) (for example a thunderstorm in the approach path), system events (19) (for example a system failure such as an engine failure, etc.) associated with the training session and a pass condition (23) (these are the action that need to be performed to pass the DFCP, e.g. landing within a certain distance from the threshold, apply thrust reserve within a certain time after touch-down, perform landing checklist before landing, etc). The database also stores the extra competencies or skills (24) that this element (flight event) is training (e.g., during a go-around, pilots would train different skills like decision making and application of procedures). The pass condition (23), for example, might be a threshold such that if the comparison result is over the threshold it is considered that the pilot has the corresponding skills or competencies. Each flight event stores a set of expected flight crew actions and behaviors, together called Desirable Flight Crew Performance (DFCP) data (18). Based on the database of flight events the instructor may design a training session. The actions performed during the execution of a training session by the student pilot must comply, at least partially, with the Desired Flight Crew Performance (DFCP) associated with the corresponding training scenarios to successfully go through each training session.

The elements of the database (12) may be also training sessions (including one or more flight events) previously designed and stored in the database of flight events.

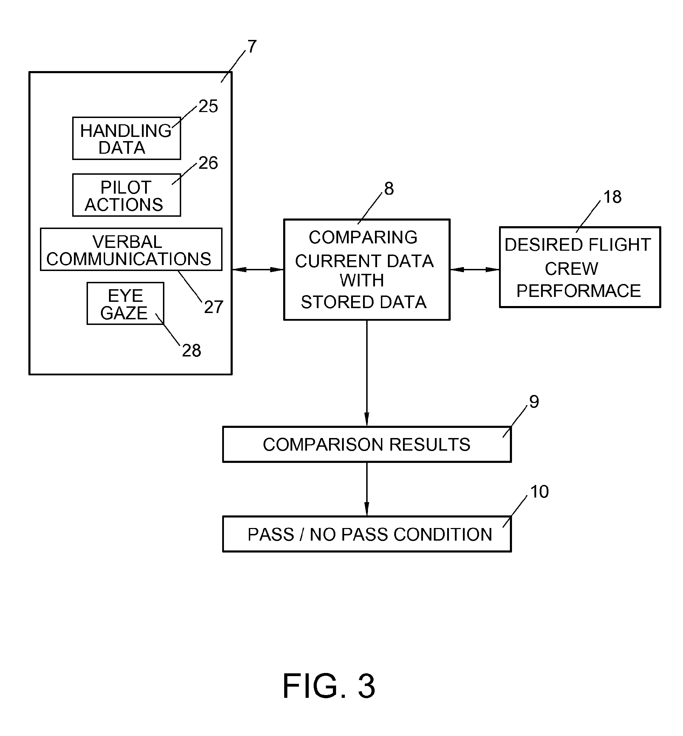

As mentioned before, during the execution of the training session (6), the flight simulator gathers data (7) according to the student actions and performance. As shown in figure 3, this gathered data corresponds to at least handling information (25), pilot actions (26), pilot verbal communications (27), and pilot eye gaze (28). Then these data are compared (8) with the desired flight crew performance data (18) stored in the database (12) in order to obtain comparison results (9) that will reflect the competencies of the pilot for establishing whether the obtained results comply with the pass/no pass condition (10).

During the training session design phase, instructors or a computer application may use the database to choose the skills to be acquired by a flight crew during the flight phases of the training scenario. Based on the element selection, the tool shows the necessary DFCPs to successfully pass the scenario and show proficiency in a certain skill.

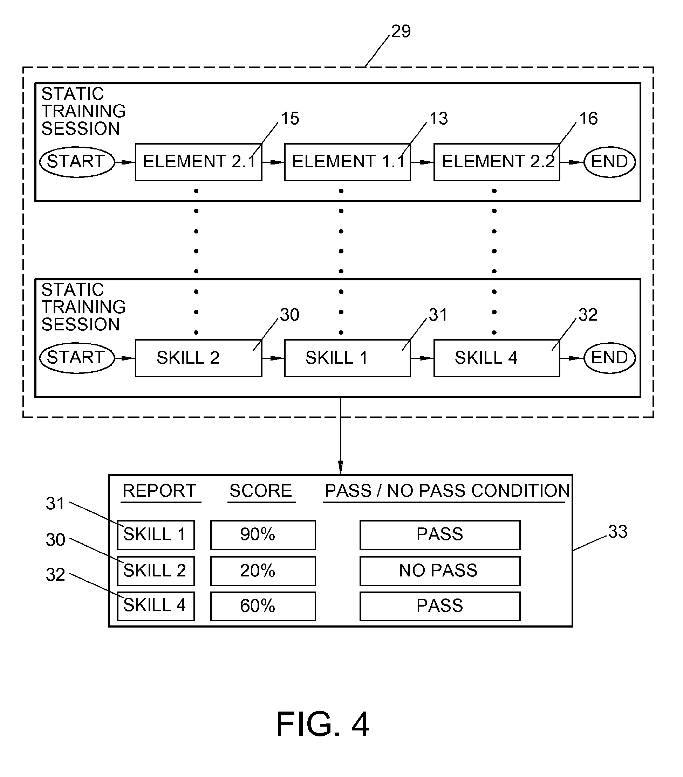

As shown in figure 4, a static training session (25) may be designed, where the elements (flight events) of the database are executed in a chronological order. For this static training session, the method automatically shows possible or required follow-up elements. In this particular example, element 2.1 (15) describes the flight event of "Raw-data Instrument Landing System approach" that has been designed for training skill 2: "manual flying" (30), the element 1.1 (13) describes the flight event of "Decision-making in emergency descent" that has been designed for training the pilot skill 1: "decision-making under stress conditions" (31), and the element 2.2 (16) describes the flight event of "Detection of wind turning on tail during approach" that has been designed for training skill 4: "situation awareness" (32).

At the end of the method, the corresponding summarized scores for each one of the trained skills are returned in a report (33). For this particular example, the scores returned are 90% of competency for skill 1 (30), 20% of competence for skill 2 (31), and 60% of competence for skill 4 (32). If a 50% of competence is previously established for any competence as a pass/no pass condition, it is clearly derivable that the pilot has shown sufficiently high performance for skills 1 and 4 but skill 2 needs to be trained. Then, the method may automatically generate a list of training deficiencies which would include skill 2, for this particular case, and automatically generate a new training session comprising flight events to address said training deficiencies. Otherwise, the method may adapt the current training session by modifying some of its parameters in order to address the mentioned training deficiencies.

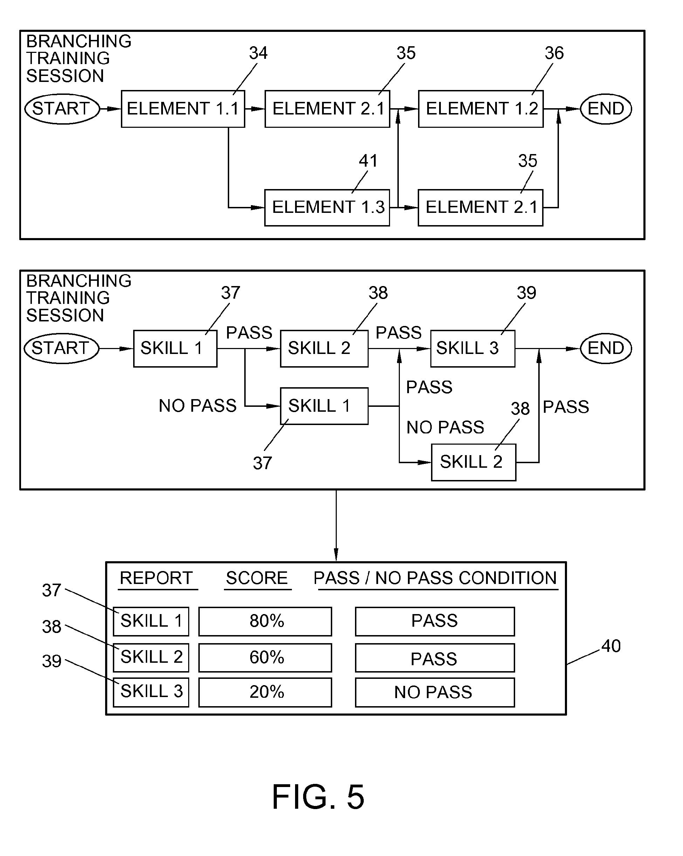

As shown in figure 5, a branching scenario session may also be designed, where based on the flight crew performance, the scenario can dynamically follow different paths, creating a more personalized training. For this branching scenario session, the method automatically shows possible or required follow-up elements. In this particular example, element 1.1 (34) defines the flight event of "engine failure" that has been designed for training skill 1: "decision-making under stress conditions" (37). If the pilot, when faces element 1.1 (34), decides to turn back to the departure airport then the pass conditions is reached and element 2.1 (35) is executed. This element 2.1 (35) defines the flight event of "electrical failure" that has been designed for training skill 2: "Decision-making in emergency descent" (38). The execution of element 2.1 (35) would force the pilot to search for a closer airport for landing. Then, if pilot decides to land at a closer airport, the pass condition is reached and element 1.2 (36) is executed. Element 1.2 (36) defines the flight event of "emergency landing" that has been designed for training skill 3: "manual flight in emergency landing" (39).

On the contrary, if after execution of element 1.1 (34) the pilot decides not to turn back to the departure airport and to continue to the destination airport, the pass conditions is not reached and skill 1 (37) is reevaluated by the method. Then the method executes element 1.3 (41) that is associated to a different flight phase but which has been designed for training skill 1 (37) too. If the pilot then satisfies the pass condition of this element 1.3 (41), then the method establishes that there is no need for executing element 2.1 (35) (so it will appear as not tested in the report (40)) and skill 3 (39) is automatically evaluated by executing element 1.2 (36). On the contrary, if the pilot does not satisfies the pass condition of element 1.3 (41), then element 2.1 (2.1) is executed and then skill 2 (38) is evaluated. At the end of the method, the corresponding summarized scores for each one of the trained skills are returned in a report (40). For a particular case in which element 1.1 (34) is failed, element 1.3 (41) is passed and element 1.2 (36) is passed, the scores returned may be 60% for competency 1 (37), competency 2 (38) would appear as not tested, and 90% for competency 3 (39).

In the example case shown in figure 5, the pilot passed element 1.1 (34), passed element 2.1 (35) and failed element 1.2 (36), so the corresponding scores are 80% for competency 1 (37), 60% for competency 2 (38) and 20 for competency 3 (39). If a 50% of competence is previously established for any competence as a pass/no pass condition, it is clearly derivable that the pilot has shown sufficiently high performance for skills 1 and 2 (37,38) but skill 3 (39) needs to be re-trained. Then, the method may automatically generate a list of training deficiencies which would include skill 3 (38) for this particular case, and automatically generates a new training session comprising flight events to address said training deficiencies. Otherwise, the method may adapt the current training session by modifying some of its parameters in order to address the mentioned training deficiencies. Other skills included in the training session but not evaluated by the method (due to the branch selected by the pilot during execution of the training session) might appear in the report labeled as "not tested". Said "not tested" skills will be included in the list of training deficiencies.

During the training session execution phase, the database is used to aid the flight instructor in evaluating the flight crew. Some DFCP items can be automatically rated by the flight simulator processor while others might need an action from the flight instructor. During the training session, the tool is showing the skills that a flight crew passed/needs to pass in order to complete the training. This helps the flight instructor to get a comprehensive picture of the status of the current training session and of the flight crew strong and weak points

The invention allows for immediate, objective assessment of the trained flight crew. If done on a training element by element basis it allows for dynamic branching of the training scenario to ensure that all skills are covered with sufficient depth to determine a quantitative proficiency profile for the trained flight crew.

The invention proposed here gathers most required information in real-time and reports the final evaluation to the instructor, allowing him to focus on more critical flight-crew behavior while having a clear overview of the scenario status and flight-crew performance.

Training success evaluation would be significantly more consistent and could be performed by less experienced personnel as the list of Desired Flight Crew Performance metrics would be approved by manufacturer and regulators prior to training.

Further, embodiments of the methods disclosed may include a computer programmed to operate in accordance with the methods described herein. The computer may be associated with a conventional flight simulator. In turn, the computer may include a processor and a memory for a computer program, that when executed causes the processor to operate in accordance with the methods described herein. The computer program may also be embodied in a computer readable medium having stored therein the computer program.

The description of the different advantageous implementations has been presented for purposes of illustration and description, and is not intended to be exhaustive or limited to the implementations in the form disclosed. Many modifications and variations will be apparent to those of ordinary skill in the art. Furthermore, different advantageous implementations may provide different advantages as compared to other advantageous implementations. Other examples are intended to be within the scope of the claims if they have structural elements that do not differ from the literal language of the claims, or if they include equivalent structural elements with unsubstantial differences from the literal language of the claims.

## Claims

1. A method for training flight crew in a flight simulator, the method comprising:
opening a database of flight events, each flight event having desired flight crew performance (DFCP) data that comprise user data associated with expected user actions;
generating a training session by selecting at least one flight event from the database of flight events;
running the training session in the simulator with at least one student;
gathering student data based on student actions during the training session; and,
comparing the gathered student data to the desired flight crew performance (DFCP) data corresponding to the same at least one flight event to produce a comparison result.

2. The method, according to claim 1, wherein the training session is generated selecting and combining at least two flight events.

3. The method according to any of preceding claims, wherein the desired flight crew performance (DFCP) data of the flight events are associated to specific flight competencies and said flight events are selected depending on the flight competencies of the student to be trained.

4. The method, according to claim 1, wherein the gathered student data are stored in the database of flight events, said student data being associated to the student actions and the selected flight events.

5. The method of claim 1, further comprising generating a report based on the comparison result.

6. The method of claim 1, wherein the gathered student data and the flight crew performance (DFCP) data comprise data from at least one of aircraft handling data, crew actions, verbal communications, and eye gaze of a flight crew member.

7. The method of claim 1, wherein the training session comprises at least one of normal and non-normal operations.

8. The method of claim 3, further comprising generating a quantitative proficiency profile based on one or more comparison results.

9. The method of claim 8, wherein the generation of the quantitative proficiency profile comprises evaluating the obtained comparison results in order to establish whether the required flight competencies associated with the flight events of the generated training session have been reached by the user.

10. The method of claims 8 or 9, further comprising:
- generating a list of training deficiencies based on the quantitative proficiency profile; and
- generating a training session comprising at least a flight event from the database of flight events to address training deficiencies; or
- adapting the current training session to address training deficiencies.

11. A computer programmed to implement the method of any of claims 1 to 10.

12. A computer program that, when executed on a computer, causes the computer to implement the method of any of the claims 1 to 10.

13. A computer program storage medium having recorded thereon a computer program according to claim 12.

14. A flight simulator comprising the computer described in claim 11.

## Amended claims

### Amended claims in accordance with Rule 137(2) EPC.

1. A Flight Simulator for training flight crew, **characterized in that**, upon operation of the flight simulator, the flight simulator is configured for:
opening a database of flight events, each flight event having desired flight crew performance (DFCP) data that comprise user data associated with expected user actions;
generating a training session by selecting at least one flight event from the database of flight events;
running the training session in the flight simulator with at least one student;
gathering student data based on student actions during the training session; and,
comparing the gathered student data to the desired flight crew performance (DFCP) data corresponding to the same at least one flight event to produce a comparison result.

2. The Flight Simulator, according to claim 1, wherein the flight simulator is configured to generate the training session by selecting and combining at least two flight events.

3. The Flight Simulator according to any of preceding claims, wherein the desired flight crew performance (DFCP) data of the flight events are associated to specific flight competencies and the flight simulator is configured to select said flight events depending on the flight competencies of the student to be trained.

4. The Flight Simulator, according to claim 1, wherein the Flight Simulator is configured to store the gathered student data in the database of flight events, said student data being associated to the student actions and the selected flight events.

5. The Flight Simulator of claim 1, further being configured to generate a report based on the comparison result.

6. The Flight Simulator of claim 1, wherein the gathered student data and the flight crew performance (DFCP) data comprise data from at least one of aircraft handling data, crew actions, verbal communications, and eye gaze of a flight crew member.

7. The Flight Simulator of claim 1, wherein the training session comprises at least one of normal and non-normal operations.

8. The Flight Simulator of claim 3, wherein the flight simulator is further configured to generate a quantitative proficiency profile based on one or more comparison results.

9. The Flight Simulator of claim 8, wherein the flight simulator generatesthe quantitative proficiency profile by evaluating the obtained comparison results in order to establish whether the required flight competencies associated with the flight events of the generated training session have been reached by the user.

10. The Flight Simulator of claims 8 or 9, wherein the flight simulator is further configured to:
- generate a list of training deficiencies based on the quantitative proficiency profile; and
- generate a training session comprising at least a flight event from the database of flight events to address training deficiencies; or
- adapt the current training session to address training deficiencies.

11. A computer program that, when executed on a computer, causes the computer to perform as the flight simulator of any of the claims 1 to 10.

12. A computer program storage medium having recorded thereon a computer program according to claim 11.
